# EUROPEAN PATENT APPLICATION

(11) **EP 1 881 546 A2**
(43) Date of publication of application: **23.01.2008**
(21) Application number: 07013516.5
(22) Date of filing: 10.07.2007
(51) Int. Cl.: H01M 4/02, H01M 4/62, H01M 4/04, H01M 10/40

(54) **Positive electrode for non-aqueous electrolytic secondary battery, and method for producing the positive electrode**

(30) Priority: 18.07.2006 JP 2006196030; 26.04.2007 JP 2007117311
(71) Applicant: NISSAN MOTOR CO., LTD., Yokohama-shi Kanagawa-ken (JP)
(72) Inventor: Miura, Tamaki, Atsugi-shi Kanagawa 243-0192 (JP); Kaneko, Taketo, Atsugi-shi Kanagawa 243-0192 (JP); Kawai, Mikio, Atsugi-shi Kanagawa 243-0192 (JP)
(74) Representative: Hager, Thomas Johannes

(57) **Abstract**

A positive electrode (8) for a non-aqueous electrolytic secondary battery (10, 60), includes: 1) a current collector (11); and 2) an active material layer (13) formed on a surface (11S) of the current collector (11), the active material layer (13) including: i) a positive electrode active material (1) having an average particle diameter (D5) of less than or equal to 5 µm, ii) a conductivity assistant (2, 7) including: a) a particulate conductive material (2) having: a primary particle diameter of less than or equal to 70 nm, and an aggregate size of less than 1 µm, and b) a long chain conductive material (7), and iii) a binder (3).

## Description

### BACKGROUND OF THE INVENTION

### 1. Field of the Invention

The present invention relates to a positive electrode for a non-aqueous electrolytic secondary battery and a method for producing the positive electrode. Especially, the present invention relates to an improvement for increasing output characteristic of the non-aqueous electrolytic secondary battery.

### 2. Description of the Related Art

Recently, decreasing carbon dioxide amount is desired for preventing atmospheric pollution or global warming. In the automobile industry, introduction of electric vehicle (EV) or hybrid electric vehicle (HEV) attracts expectation for decreasing carbon dioxide emission. Therefore, development of a secondary battery for driving a motor of the above vehicles is implemented.

Among all secondary batteries for driving motor, a lithium ion secondary battery causing the highest theoretical energy attracts attention and therefore is under a rapid development presently. The lithium ion secondary battery, in general, has the following structure:
A positive electrode where a positive electrode active material and the like is applied to both faces of a positive electrode current collector by using a binder, and a negative electrode where a negative electrode active material and the like is applied to both faces of a negative electrode current collector by using a binder are connected via an electrolyte layer, to be received in a battery case.

As disclosed in Japanese Patent Application Laid-Open No. 2004-111242 (= JP2004111242), a vehicle secondary battery is required to cause a higher output. Methods for effectively increasing output of secondary battery are proposed as follows:
Japanese Patent Application Laid-Open No. Heisei 7 (1995)-97216 (= JP7097216) discloses a conventional positive electrode using Spinel type structure manganese compound oxide having BET specific surface of more than or equal to 3 m²/g, and Japanese Patent Application Laid-Open No. Heisei 7 (1995)-122262 (= JP7122262) discloses an electrode having specific surface of more than or equal to 4 m²/g.

Meanwhile, not merely having a large specific surface, an electrode including composition having an extremely small particle size is expected to accomplish a high output battery. Japanese Patent Application Laid-Open No. 2003-151547 (= JP2003151547) discloses a positive electrode active material having a particle size as small as more than or equal to 5 µm, effectively improving cycle characteristic or output characteristic. Setting the above lower limit (5 µm) is mainly due to decrease in active material amount (that is, capacity density) per unit weight. In this case, the above decrease is attributable to a possible increase of other solid ratio such as binder for forming an electrode, where the above increase is caused by particles made smaller.

Recently, for increasing the specific surface of the positive electrode active material, particle diameter of the positive electrode active material is decreased (for example, less than 5 µm). Japanese Patent Application Laid-Open No. 2002-151055 (= JP2002151055) discloses a high-output lithium ion secondary battery including a positive electrode active material having a particle diameter of less than or equal to 5 µm. Controlling the voidage in active material and the particle diameter of active material increase transportability of lithium ion in electrolytic solution in the electrode, thereby binging about a high output.

However, when using a positive electrode active material having a small particle diameter, a method different from when using a positive electrode active material having a particle diameter of more than or equal to 5 µm is to be used for improving the battery output characteristic. For example, an electrode is provided which has an active material layer including 1) a positive electrode active material and 2) a particulate conductivity assistant such as carbon black and the like for causing conductivity. When the particle diameter of the positive electrode active material is far larger than the particle diameter of the conductivity assistant (for example, active material: 20 µm, conductivity assistant: 1 µm), the conductivity assistant is dispersed in a gap between the active materials, forming a preferable complex conductive net. Meanwhile, when the particle diameter of the positive electrode active material is as small as the particle diameter of the conductivity assistant, a complex conductive net is unlikely to be formed, thus increasing resistance. Moreover, the specific surface of the positive electrode active material is increased, thereby increasing contact points between particles of the positive electrode active material. Therefore, from the viewpoint of keeping conductivity, the required amount of the conductivity assistant is to be taken into account. Though disclosing use of the positive electrode active material having a small particle diameter, the JP2002151055 fails to describe scale or form of the conductivity assistant.

### SUMMARY OF THE INVENTION

In respect of a positive electrode for a lithium ion secondary battery, it is an object of the present invention to provide an operation for improving battery output characteristic by securing electron conduction in a positive electrode active material layer including a positive electrode active material having a small particle diameter.

The present inventors studied hard for solving the above subjects. During the study, the present inventors tried to use various forms of conductive materials as conductivity assistant, i.e., not only particulate conductivity assistant, in the positive electrode active material layer. As a result, the present inventors have found out that combining, as a conductivity assistant, a particulate conductive material with a long chain conductive material solves the above subject, leading to completion of the present invention.

According to a first aspect of the prevent invention, there is provided a positive electrode for a non-aqueous electrolytic secondary battery, comprising: 1) a current collector; and 2) an active material layer formed on a surface of the current collector, the active material layer including: i) a positive electrode active material having an average particle diameter of less than or equal to 5 µm, ii) a conductivity assistant including: a) a particulate conductive material having: a primary particle diameter of less than or equal to 70 nm, and an aggregate size of less than 1 µm, and b) a long chain conductive material, and iii) a binder.

According to a second aspect of the prevent invention, there is provided a method for producing a positive electrode for a non-aqueous electrolytic secondary battery, the method comprising: 1) a first operation for preparing a slurry of a positive electrode active material, the first operation including the following sub-operations: i) dry shattering or damp shattering the positive electrode active material, ii) adding a particulate conductive material and a long chain conductive material sequentially, iii) adding a polar organic solvent, iv) adding a binder, v) mulling, and vi) dispersing the positive electrode active material; and 2) a second operation including the following sub-operations: i) applying the slurry of the positive electrode active material onto a current collector, and ii) drying.

According to a third aspect of the prevent invention, there is provided a method for producing a positive electrode for a non-aqueous electrolytic secondary battery, the method comprising: 1) a first operation for preparing an initial slurry, the first operation including the following sub-operations: i) melting a binder in a polar organic solvent to thereby prepare a solution, ii) adding a positive electrode active material to the solution, and iii) damp shattering; 2) a second operation for preparing a slurry of the positive electrode active material, the second operation including the following sub-operations: i) adding a particulate conductive material and a long chain conductive material sequentially to the initial slurry, and ii) dispersing; and 3) a third operation including the following sub-operations: i) applying the slurry of the positive electrode active material onto a current collector, and ii) drying.

According to a fourth aspect of the prevent invention, there is provided a method for producing a positive electrode for a non-aqueous electrolytic secondary battery, the method comprising: 1) a first operation for preparing a dispersed mixture body by the following sub-operations: i) dry shattering or damp shattering a positive electrode active material, ii) adding a particulate conductive material and a binder, and iii) mixing; 2) a second operation for preparing an initial slurry by the following sub-operations: i) adding a polar organic solvent to the dispersed mixture body, and ii) mulling, 3) a third operation for preparing a slurry of the positive electrode active material by the following sub-operation: i) adding a long chain conductive material and a polar organic solvent to the initial slurry; and 4) a fourth operation including the following sub-operations: i) applying the slurry of the positive electrode active material onto a current collector, and ii) drying.

According to a fifth aspect of the prevent invention, there is provided a non-aqueous electrolytic secondary battery, comprising: 1) at least one unit cell layer including: i) the positive electrode according to the first aspect, ii) an electrolyte layer stacked on the positive electrode, and iii) a negative electrode stacked on the electrolyte layer.

According to a sixth aspect of the prevent invention, there is provided a non-aqueous electrolytic secondary battery, comprising: 1) at least one unit cell layer including: i) the positive electrode produced by the method according to the second aspect, ii) an electrolyte layer stacked on the positive electrode, and iii) a negative electrode stacked on the electrolyte layer.

According to a seventh aspect of the prevent invention, there is provided a non-aqueous electrolytic secondary battery, comprising: 1) at least one unit cell layer including: i) the positive electrode produced by the method according to the third aspect, ii) an electrolyte layer stacked on the positive electrode, and iii) a negative electrode stacked on the electrolyte layer.

According to an eighth aspect of the prevent invention, there is provided a non-aqueous electrolytic secondary battery, comprising: 1) at least one unit cell layer including: i) the positive electrode produced by the method according to the fourth aspect, ii) an electrolyte layer stacked on the positive electrode, and iii) a negative electrode stacked on the electrolyte layer.

According to a ninth aspect of the prevent invention, there is provided a battery pack comprising: the non-aqueous electrolytic secondary battery according to the fifth aspect.

According to a tenth aspect of the prevent invention, there is provided a transporter comprising: the non-aqueous electrolytic secondary battery according to the fifth aspect.

According to an eleventh aspect of the prevent invention, there is provided a transporter comprising: the battery pack according to the ninth aspect.

The other object(s) and feature(s) of the present invention will become understood from the following description with reference to the accompanying drawings.

### BRIEF DESCRIPTION OF THE DRAWINGS

Fig. 1 shows a flow chart for preparing a slurry in a method for producing a positive electrode, under the present invention.
Fig. 2 is a cross sectional view of a bipolar battery, according to a second embodiment of the present invention.
Fig. 3 is a perspective view of a battery pack, according to a third embodiment of the present invention.
Fig. 4 is a schematic of a vehicle to which the battery pack according to the third embodiment is installed, according to a fourth embodiment of the present invention.
Fig. 5 shows a schematic of a lithium ion secondary battery not of a bipolar type, under the present invention.

### DESCRIPTION OF THE PREFERRED EMBODIMENTS

Hereinafter, various embodiments of the present invention are to be set forth. However, the technical scope of the present invention is to be determined based on description of claims, and therefore is not limited to the following embodiments.

For ease of understanding, the following description will contain various directional terms, such as left, right, upper, lower, forward, rearward and the like. However, such terms are to be understood with respect to only a drawing or drawings on which the corresponding part of element is illustrated.

### (First embodiment)

### (Structure)

Under the present invention, a positive electrode for a non-aqueous electrolytic secondary battery, comprises: 1) a current collector; and 2) an active material layer formed on a surface of the current collector, the active material layer including: i) a positive electrode active material having an average particle diameter of less than or equal to 5 µm, ii) a conductivity assistant including: a) a particulate conductive material having: a primary particle diameter of less than or equal to 70 nm, and an aggregate size of less than 1 µm, and b) a long chain conductive material, and iii) a binder.

The positive electrode for the non-aqueous electrolytic secondary battery under the present invention includes a positive electrode active material layer which is formed on at least one face of a current collector. In addition, as described below, composition of the positive electrode for the battery mainly includes a positive electrode active material, a conductivity assistant and a binder.

The positive electrode for the non-aqueous electrolytic secondary battery (hereinafter, otherwise simply referred to as "positive electrode") under the present invention includes an active material layer which is a combination of:
i) a positive electrode active material having an average particle diameter of less than or equal to 5 µm, and
ii) a conductivity assistant including:
   a) a particulate conductive material having a primary particle diameter of less than or equal to 70 nm and an aggregate size of less than 1 µm, and
   b) a long chain conductive material.

The positive electrode for the non-aqueous electrolytic secondary battery of the present invention is applicable, for example, to a bipolar-type lithium ion secondary battery (hereinafter, otherwise simply referred to as "bipolar battery"), and, as a matter of course, to other batteries.

Hereinafter, structure of the positive electrode for the non-aqueous electrolytic secondary battery (in this case, a lithium ion secondary battery) is to be set forth, under the present invention. Selection of i) current collector, ii) positive electrode active material, iii) binder, iv) supporting salt (lithia salt), v) ion conductive polymer, and vi) other compounds added when necessary is not specifically limited. According to applications, the above selection may be made by properly referring to a conventional technology.

### [Current collector]

The current collector includes a conductive material selected from the group consisting of aluminum foil, nickel foil, stainless (SUS) foil and the like. The current collector has a typical thickness of 1 µm to 30 µm, but not specifically limited to the above thickness.

Scale of the current collector is determined according to the application of the battery. For preparing a large electrode to be used for a large battery, a current collector having a large area is to be used. For preparing a small electrode to be used for a small battery, a current collector having a small area is to be used.

### [Active material layer]

An active material layer is formed on the current collector. The active material layer includes i) an active material which serve as a center of charge-discharge reaction and ii) a conductivity assistant. Since the electrode of the present invention is used as the positive electrode, the active material layer includes a positive electrode active material.

In the positive electrode of the present invention, the conductivity assistant includes:
i) a particulate conductive material having a primary particle diameter of less than or equal to 70 nm and an aggregate size of less than 1 µm, and
ii) a long chain conductive material.

The positive electrode active material, preferably, includes at least one oxide selected from the group consisting of lithium manganese compound oxide, lithium nickel compound oxide, lithium cobalt compound oxide, lithium-containing ferrous oxide, and lithium-manganese-nickel-cobalt compound oxide. Examples of the oxide include i) lithium manganese compound oxide such as LiMn₂O₄ and the like and ii) lithium nickel compound oxide such as LiNiO₂ and the like. As the case may be, combination of two or more kinds of the positive electrode active materials is allowed. Using the above active materials can prepare particles having an average particle diameter of less than or equal to 5 µm.

The smaller the average particle diameter D50 of the positive electrode active material is, the more the electron conduction path is likely to be separated. Therefore, the smaller the average particle diameter of the active material is, the more remarkable an operational effect of the present invention is. In view of the above, with the positive electrode for the non-aqueous electrolytic secondary battery of the present invention, the positive electrode active material has an average particle diameter of less than or equal to 5 µm, more preferably less than or equal to 3 µm. Especially preferably, the average particle diameter of the positive electrode active material is 1 µm to 2 µm. Moreover, in this patent application, the average particle diameter of the active material can be obtained through a measurement of 50 % cumulative particle diameter by subjecting the active material particle to a laser diffraction scattering method. Moreover, an image analysis using an SEM (Scanning Electron Microscope) photograph of electrode can verify particle diameter. When the measurements find difference in average particle diameter, the average particle diameter by the image analysis method through the SEM photograph is to be adopted.

Moreover, other than optimization of synthesizing conditions, examples of making the above positive electrode active material into particles include shattering methods such as jet mill shatter, dry beads mill shatter, damp applied pressure collision shatter and the like.

When the positive electrode active material having an average particle diameter of less than or equal to 5 µm is used for the positive electrode active material layer, a particulate conductive material (as conductivity assistant) having a primary particle diameter of less than or equal to 70 nm and having an aggregate size of less than 1 µm can efficiently be dispersed around periphery of the positive electrode active material. Thereby, the particulate conductive material can be effectively packed. Moreover, applying the long chain conductive material as the conductivity assistant forms a complex conductive net, decreasing resistance, to thereby increase output of the battery.

With the positive electrode for the non-aqueous electrolytic secondary battery of the present invention, the particulate conductive material has a primary particle diameter of less than or equal to 70 nm, preferably less than or equal to 60 nm, and more preferably less than or equal to 40 nm. Moreover, in view of productivity, the primary particle diameter of the particulate conductive material is preferably more than or equal to 10 nm. Moreover, size of the particulate conductive material in a form of aggregate is less than 1 µm, and preferably less than or equal to 0.5 µm. Moreover, in view of the primary particle diameter and handling, the particulate conductive material in the form of aggregate is preferably more than or equal 50 nm, and more preferably more than or equal to 0.3 µm. Herein, the size of the aggregate denotes a minimum unit by which the particulate conductive material can exist with its features kept. In addition, in this patent application, the primary particle diameter and aggregate size of the particulate conductive material can be verified through SEM or TEM (Transmission Electron Microscope) observation. When the measurements find difference in primary particle diameter and aggregate size, data obtained through the SEM observation is to be adopted.

In this patent application, the long chain conductive material has an aspect ratio of more than or equal to 1, and is a thin plate having a configuration where, for example, fibrous particle are chemically coupled. Fiber length is preferably more than or equal to 1 µm, while fiber diameter is preferably 0.1 nm to 200 nm and more preferably 50 nm to 150 nm, forming a long fibrous conductive material. Length of the long chain conductive material can be measured thorough the SEM observation. The length of the long chain conductive material is preferably more than or equal to 1 µm, more preferably more than or equal to 3 µm, and still moreover preferably more than or equal to 10 µm.

The conductivity assistant preferably includes at least one carbon material selected from the group consisting of graphite, amorphous carbon, and fibrous carbon. Examples of the carbon materials include: 1) graphite carbon materials such as natural graphite, artificial graphite, swell graphite and the like, 2) acetylene black, 3) carbon black, 4) active carbon, 5) carbon fiber, 6) coke, 7) soft carbon, 8) hard carbon, 9) various carbon fibers such as vapor grown carbon fiber (VGCF: registered trademark), 10) carbon nano tube, and the like. Between the particulate conductive material and the long chain conductive material, same carbon material or different carbon material can be used. Otherwise, Ag is preferably used for the particulate conductive material, while metal fiber is preferably used for the long chain conductive material. In addition, the conductive materials are not limited to those set forth above.

For the active material layer, preferably 5 to 25 mass part and more preferably 10 to 20 mass part of the above conductivity assistant is used relative to the positive electrode active material 100 mass part. In this case, amount (mass) of the conductivity assistant is a total of the particulate conductive material and the long chain conductive material. The particulate conductive material and the long chain conductive material have a preferable mass ratio (particulate conductive material/long chain conductive material) of 2 to 20 and more preferably 3 to 10.

When necessary, the active material layer may contain other materials. Examples of the other materials include binder, supporting salt (lithia salt), ion conductive polymer and the like. Moreover, when the ion conductive polymer is contained, polymerization initiator for polymerizing the ion conductive polymer can be contained.

Example of the binder include polyvinylidene fluoride (PVdF), synthetic rubber binder and the like. Using the binder can bind and hold stably the active material carried in the conductive structure. For the positive electrode of the present invention, preferably, a binder including polyvinylidene fluoride is used. Using the polyvinylidene fluoride can stably keep the active material and the particulate conductive material which are small in particle diameter, with an overall binding force held.

Examples of the supporting salt (lithia salt) include Li(C₂F₅SO₂)₂N (LiBETI), LiPF₆, LiBF₄, LiClO₄, LiAsF₆, LiCF₃SO₃ and the like.

Examples of the ion conductive polymer include polymers of polyethylene oxide (PEO) and polypropylene oxide (PPO). Herein, the above polymer may be the same as or different from an ion conductive polymer for an electrolyte layer of the battery to which the positive electrode of the present invention is applied, preferably be the same though.

The polymerization initiator is contained in the active material layer, so as to promote cross-link reaction by working on a cross-link base of the ion conductive polymer. The polymerization initiator is classified into photo polymerization initiator, heat polymerization initiator and the like, according to external factors for operating as an initiator. Examples of the polymerization initiator include azobis isobutyro nitrile (AIBN) as heat polymerization initiator, and benzyl dimethyl ketal (BDK) as photo polymerization initiator, and the like.

Blend ratio of components contained in the active material layer is not specifically limited. The blend ratio is to be adjusted by properly referring to the conventional technology about lithium ion secondary battery. Preferably, the blend ratio of binder is 1 mass part to 15 mass part relative to 100 mass part of the active material.

### (Production method)

A method for producing the positive electrode for the non-aqueous electrolytic secondary battery of the present invention is not specifically limited, and can be determined by properly referring to the conventional technology in the field of producing electrode for battery.

The positive electrode of the present invention can be prepared, for example, through the following operations:
i) dry shattering or damp shattering a positive electrode active material,
ii) adding a particulate conductive material and a long chain conductive material sequentially,
iii) adding a polar organic solvent,
iv) adding a binder, and
v) mulling, and
vi) dispersing the positive electrode active material,
to thereby prepare a slurry of the positive electrode active material.
Then,
i) applying the slurry onto a surface of a current collector, and
ii) drying.
Hereinafter, the above method is to be set forth in detail in the order of steps (operations).

### (Step 1 - first operation)

In a step 1, firstly, as the conductivity assistant, the particulate conductive material and the long chain conductive material are added in this order to a certain positive electrode active material. When necessary, other components {for example, supporting salt (lithia salt), ion conductive polymer, polymerization initiator and the like} are mixed. Then, a polar organic solvent is added. Thereby, an active material slurry is prepared.
Adding in the order of the particulate conductive material and the long chain conductive material can homogeneously disperse the particulate conductive material in the slurry of the positive electrode active material. The specific embodiment of each component blended in the slurry of the positive electrode active material is as set forth above. In addition, for the long chain conductive material, fibrous material having an average particle diameter of 1 µm to 10 µm and in the form of particulate aggregate can be used. The material in the form of the above aggregate is dispersed in the slurry of the positive electrode active material, thus forming a long fiber.

Type or mixing of the polar organic solvent is not specifically limited, and therefore can be determined by properly referring to the conventional technology about electrode production. Examples of the polar organic solvent include N-methyl-2-pyrrolidone (NMP), dimethyl formamide, dimethyl acetoamide, methyl formamide, and the like. For adopting the polyvinylidene fluoride (PVdF) as binder, the NMP may be used as solvent.

Then, the current collector for forming the active material layer is to be prepared. The specific embodiment of the current collector prepared in this operation is as set forth above, and therefore detailed explanation is to be omitted.

### (Step 2 - second operation)

Then, the thus prepared active material slurry is applied to the surface of the thus prepared current collector, to thereby form a coated film, followed by dry treatment. With this, solvent in the coated film is removed, to thereby form a coated film for serving as the active material layer. Thickness of the coated film is not specifically limited, usually 10 µm to 100 µm.

The operation for applying the active material slurry is not specifically limited. For example, operations generally used such as coater and the like can be adopted therefor.

Moreover, for preparing the electrode, a method including the following operations can be used:
1)
   i) melting a binder in a polar organic solvent to thereby prepare a solution,
   ii) adding a positive electrode active material to the solution, and
   iii) damp shattering,
      to thereby prepare an initial slurry;
2)
   i) adding a particulate conductive material and a long chain conduction material sequentially to the initial slurry, and
   ii) dispersing,
      to thereby prepare a slurry of the positive electrode active material; and
3)
   i) applying the slurry of the positive electrode active material onto a current collector, and
   ii) drying.
      Adding in the order of the particulate conductive material and the long chain conductive material can homogeneously disperse the particulate conductive material in the slurry of the positive electrode active material.

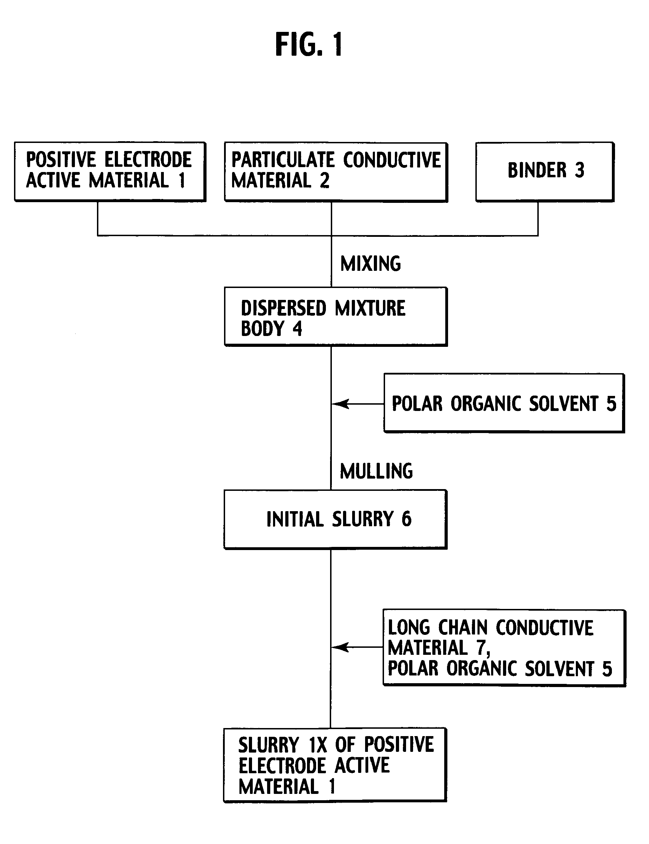

Moreover, the positive electrode of the present invention, for example as shown in Fig. 1, can be prepared by the following operations:
1)
   i) dry shattering or damp shattering a positive electrode active material 1,
   ii) adding a particulate conductive material 2, a binder 3 such as polyvinylidene fluoride (PVdF), and the like,
   iii) mixing,
   to thereby prepare a dispersed mixture body 4;
2)
   i) adding a polar organic solvent 5 such as N-methyl-2-pyrrolidone (NMP) and the like to the dispersed mixture body 4, and
   ii) mulling,
      to thereby prepare an initial slurry 6;
3) i) adding a long chain conductive material 7 and a polar organic solvent 5 to the initial slurry 6, to thereby prepare a slurry 1X of the positive electrode active material 1;
4)
   i) applying the slurry 1X of the positive electrode active material 1 onto a current collector 11, and
   ii) drying.
      The slurry 1X of the positive electrode active material 1 is prepared by adding the long chain conductive material 7 and the polar organic solvent 5 to the initial slurry 6. After the long chain conductive material 7 is added to the initial slurry 6, the polar organic solvent 5 may be further added, or the long chain conductive material 7 dispersed in the polar organic solvent 5 may be added to the initial slurry 6. The method shown in Fig. 1 is preferable, especially when the particle diameter of the positive electrode active material 1 is small, suppressing aggregation of the active material 1 and making a homogeneous dispersion.

The above method can form the coated film. In this production method, subjecting an entire coated film to a flat plate press treatment forms the positive electrode.

### (Second embodiment)

According to a second embodiment, there is provided a battery including the positive electrode according to the first embodiment.

That is, the present invention relates to a non-aqueous electrolytic secondary battery having at least one unit cell layer where the positive electrode, electrolyte layer, and negative electrode are stacked in this order, with the above positive electrode being the positive electrode of the present invention. The positive electrode of the present invention is applicable to an embodiment of a bipolar electrode. A battery including the positive electrode of the present invention as at least one electrode is included within the technical scope of the present invention. Adopting the above structure can effectively improve battery durability.

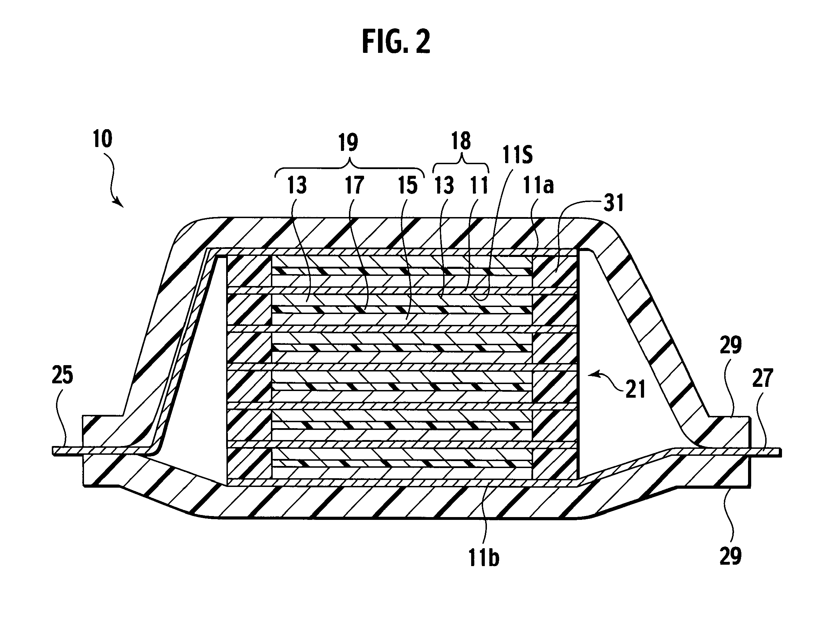

The battery of the present invention can be a bipolar battery. Fig. 2 is a cross sectional view of a bipolar battery of the present invention. Hereinafter, the bipolar battery Fig. 2 is to be set forth in detail according to the second embodiment. The technical scope of present invention is, however, not limited to the second embodiment.

The bipolar battery 10 according to the second embodiment shown in Fig. 2 has a structure where a substantially rectangular battery element 21 for actually progressing a charge-discharge reaction is sealed in a laminate sheet 29 as a sheath. Each of the bipolar electrodes is stacked via an electrolyte layer 17, to thereby form a battery element 21. In this case, each bipolar electrode and the electrolyte layer 17 are stacked in such a configuration that a positive electrode active material layer 13 of one bipolar electrode and a negative electrode active material layer 15 of another bipolar electrode adjacent to the one bipolar electrode face via the electrolyte layer 17.

Then, the positive electrode active material layer 13, the electrolyte layer 17, and the negative electrode active material layer 15 adjacent to each other form a unit cell layer 19. Therefore, the bipolar battery 10 has a structure where the unit cell layers 19 are stacked. Moreover, the unit cell layer 19 has an outer periphery formed with an insulative layer 31 for insulating an area between the current collectors 11 adjacent to each other. In addition, each of the outermost layer current collectors 11 a, 11b has only one face that is formed with the active material layer. Specifically, the outermost layer current collectors 11a, 11b of the battery element 21 have faces formed respectively with the positive electrode active material layer 13 (the outermost layer current collector 11a on the positive electrode side) and the negative electrode active material layer 15 (the outermost layer current collector 11b on the negative electrode side).

Moreover, in the bipolar battery 10 shown in Fig. 2, the outermost layer current collector 11a on the positive electrode side so extends as to form a positive electrode tab 25 and is led out of the laminate sheet 29 as sheath, while the outermost layer current collector 11 b on the negative electrode side so extends as to form a negative electrode tab 27 and likewise is led out of the laminate sheet 29.

### <Members of bipolar battery 10>

Hereinafter, members of the bipolar battery 10 are to be explained according to the second embodiment. However, description of the components of the positive electrode set forth above is to be omitted. Moreover, the technical scope of present invention is not limited to the second embodiment, and therefore an embodiment of the conventional technology may be adopted likewise for the present invention.

### [Negative electrode]

Structure of the negative electrode is substantially the same as the structure of the positive electrode. Instead of the positive electrode active material for the positive electrode, however, a negative electrode active material is used for the negative electrode.

The negative electrode active material is preferably the lithium transition metal-compound oxide described above or carbon. Examples of carbon include graphite carbon materials such as natural graphite, artificial graphite, swell graphite and the like; carbon black; active carbon; carbon fiber; coke; soft carbon; hard carbon; and the like. As the case may be, two or more of the negative electrode active materials may be combined. Average particle diameter of the negative electrode active material is not specifically limited.

Binder, supporting salt (lithia salt), ion conductive polymer, and other compounds which are added when necessary can be selected in a manner like that of the positive electrode, and therefore detailed explanation of the above additives is omitted.

### [Electrolyte layer]

Examples of an electrolyte of the electrolyte layer 17 include liquid electrolyte or polymer electrolyte.

The liquid electrolyte is made by melting lithia salt (as supporting salt) in an organic solvent as a plasticizer. Examples of the organic solvent as plasticizer include carbonates such as ethylene carbonate (EC), propylene carbonate (PC) and the like. Moreover, examples of the supporting salt (lithia salt) include compounds added to an active material layer of an electrode made of Li(C₂F₅SO₂)₂N (LiBETI) and the like.

Meanwhile, the polymer electrolyte is classified into a gel electrolyte containing an electrolytic solution, and an intrinsic polymer electrolyte not containing the electrolytic solution.

The gel electrolyte has a structure where the above liquid electrolyte is injected in a matrix polymer made of ion conductive polymer. Examples of the ion conductive polymer used as the matrix polymer include polyethylene oxide (PEO), polypropylene oxide (PPO), copolymers thereof, and the like. Electrolytic salt such as lithia salt and the like is smoothly melted into the above poly alkylene oxide macromolecules.

In addition, when the electrolyte layer 17 includes the liquid electrolyte or gel electrolyte, a separator may be used for the electrolyte layer 17. Examples of the separator include particulate porous films made of poly olefin such as polyethylene, polypropylene and the like.

The intrinsic polymer electrolyte includes the supporting salt (lithia salt) melted in the matrix polymer, and does not include an organic solvent as plasticizer. Therefore, when the electrolyte layer 17 includes the intrinsic polymer electrolyte, solution leak from the battery is not caused, improving battery reliability.

When being formed with a cross link structure, the matrix polymer of the gel electrolyte or intrinsic polymer electrolyte features an excellent mechanical strength. For forming the cross-link structure, a polymerizing polymer {for example, polyethylene oxide (PEO) or polypropylene oxide (PPO)} for forming macromolecule electrolyte is subjected to a polymerization treatment such as heat polymerization, ultraviolet ray polymerization, radiation polymerization, electron beam polymerization and the like using a proper polymerization initiator.

### [Insulative layer]

The bipolar battery 10 usually has an insulative layer 31 around each unit cell layer 19. The insulative layer 31 is provided for preventing a possible contact between current collectors 11 adjacent to each other in the battery, or a possible short circuit attributable to a slightly disordered end part and the like of the unit cell layer 19 of the battery element 21. Setting the above insulative layer 31 can secure a long-term reliability and safety, bringing about a high-quality bipolar battery 10.

Any insulative layer 31 is acceptable provided that such insulative layer should have insulation, sealability against solid electrolyte falling, outer moisture sealability, heat resistance at battery operation temperature, and the like. Examples of the insulative layer 31 include urethane resin, epoxy resin, polyethylene resin, polypropylene resin, polyimide resin, rubber, and the like. Among the above, the urethane resin and epoxy resin are preferable, in view of corrosion resistance, chemical resistance, machinability (film productivity), economy and the like.

### [Tab]

For taking current out of the battery, the bipolar battery 10 has a tab (positive electrode tab 25 and negative electrode tab 27) which is taken out of the laminate sheet 29 as a sheath and is electrically connected to the outermost layer current collector (11a, 11b). Specifically, the positive electrode tab 25 electrically connected to the outermost layer current collector 11a for the positive electrode and the negative electrode tab 27 electrically connected the outermost layer current collector 11b for the negative electrode are each taken out of the laminate sheet 29.

Material of the tab (positive electrode tab 25 and negative electrode tab 27) is not specifically limited, and therefore can be those conventionally used as a tab for a bipolar battery. Examples of the material of the tab include aluminum, copper, titanium, nickel, stainless steel (SUS), alloys thereof, and the like. In addition, the same or different material can be used between the positive electrode tab 25 and the negative electrode tab 27. In addition, the tab (25, 27) may be formed by extending the outermost layer current collector (11a, 11b) as set forth above according to the second embodiment. An otherwise prepared tab may be connected to the outermost layer current collector.

### [Sheath]

With the bipolar battery 10, for preventing a possible outer shock or an ambient deterioration during operation, the battery element 21 is housed in a sheath such as, preferably, the laminate sheet 29 and the like. The sheath is not specifically limited, and therefore those according to the conventional technology can be used. From the viewpoint of efficiently transmitting heat from a heat source of a vehicle and rapidly heating inner part of the battery up to a battery operation temperature, preferable examples of the sheath include macromolecule-metal compound laminate sheet and the like which is excellent in heat conductivity.

The bipolar battery 10 according to the second embodiment has the electrode of the present invention formed on both faces of the current collector 11. Therefore, the bipolar battery according to the second embodiment is excellent in output characteristic.

Herein, the above described operation and effect of the present invention are remarkably brought about especially in the secondary battery used under a high output condition. Therefore, the secondary battery of the present invention is preferably used under the high output condition. Specifically, the secondary battery of the present invention is preferably used under a condition requiring an output of more than or equal to 20C, more preferably more than or equal to 50C, still more preferably more than or equal to 100C.

### (Third embodiment)

According to a third embodiment, a plurality of the bipolar batteries 10 according to the second embodiment are connected in parallel or in series, to thereby form a battery pack 40.

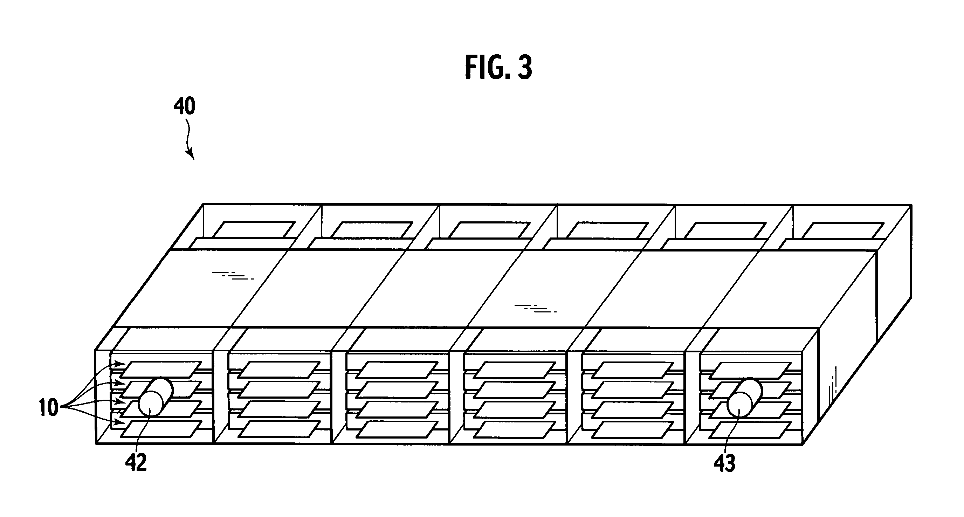

Fig. 3 is a perspective view of the battery pack 40, according to the third embodiment.

As shown in Fig. 3, the battery pack 40 includes a plurality of the connected bipolar batteries 10 according to the second embodiment. Specifically, connecting the positive electrode tab 25 with the negative electrode tab 27 of each of the bipolar batteries 10 by using a bus bar can connect the bipolar batteries 10. A first side face of the battery pack 40 has an electrode terminal (42, 43) serving as an entire electrode of the battery pack 40.

A method for connecting the plurality of the bipolar batteries 10 of the battery pack 40 is not specifically limited, and therefore a conventional method can be properly adopted. Examples of the connecting methods include welding methods such as ultrasonic welding, spot welding and the like, and fixing methods such as those using rivet, caulk and the like. The above connecting methods can improve long-term reliability of the battery pack 40.

According to the third embodiment, each of the bipolar battery 10 of the battery pack 40 is excellent in output characteristic, thus bringing about a battery pack excellent in output characteristic.

In addition, connection of the bipolar batteries 10 of the battery pack 40 may be any one of: all parallel connection, all series connection, and a combination of the series connection and the parallel connection.

### (Fourth embodiment)

According to a fourth embodiment, a transporter includes, as a motor driving source, any one of i) the bipolar battery 10 according to the second embodiment and ii) the battery pack 40 according to the third embodiment. Examples of the transporter using, as the motor driving source, the bipolar battery 10 or the battery pack 40 include: 1) a completely electric vehicle not using gasoline, 2) a hybrid vehicle such as series hybrid vehicle, parallel hybrid vehicle and the like, and 3) a motor-driven vehicle (driving wheels) such as fuel cell vehicle and the like, and the like.

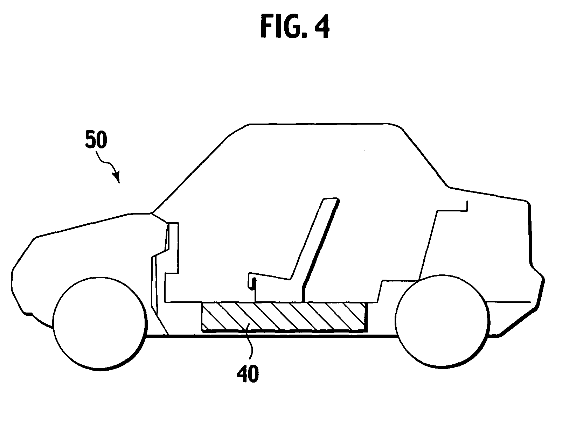

For reference purpose, Fig. 4 shows a schematic of a vehicle 50 including the battery pack 40. The battery pack 40 installed in the vehicle 50 have the above characteristics. Therefore, the vehicle 50 including the battery pack 40 is excellent in output characteristic, bringing about a sufficient output even after a long-term operation.

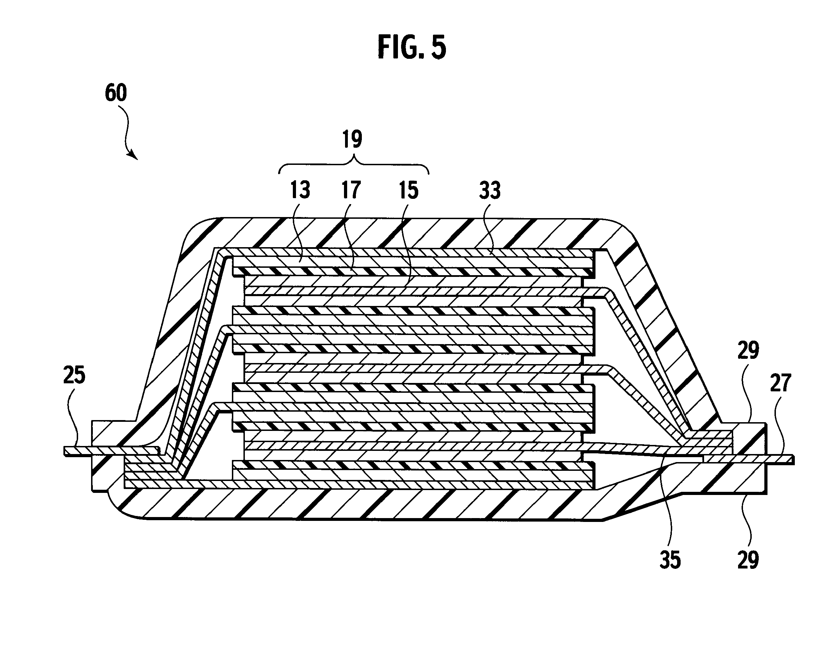

As described above, various preferable embodiments of the present invention have been set forth. The present invention is, however, not limited to the above embodiments, and may have variations, changes, omissions or additions by a person skilled in the art. For example, the bipolar-type lithium ion secondary battery (bipolar battery) has been described above. However, the technical scope of the battery of the present invention is not limited to the bipolar battery, but may be, for example, a secondary battery which is not of bipolar type. For reference purpose, Fig. 5 is a cross sectional view of a schematic of a lithium ion secondary battery 60 which is not of bipolar type and has a positive electrode current collector 33 and a negative electrode current collector 35. Herein, with the lithium ion secondary battery 60 shown in Fig. 5, the negative electrode active material layer 15 is smaller than the positive electrode active material layer 13, but not limited thereto. Otherwise, the negative electrode active material layer 15 as large as or larger than the positive electrode active material layer 13 is allowed.

### [Examples]

The effects of the present invention are to be set forth, referring to the following examples and comparative examples. However, the technical scope of the present invention is not limited to the following examples.

### <Preparation of positive electrode>

### <First example>

Lithium manganese compound oxide (LiMn₂O₄) having an average particle diameter D50 of about 1 µm was used as a positive electrode active material. As conductivity assistants, 1) a carbon black made of particulate conductive material (conductivity assistant A) and having a primary particle diameter of 20 nm and an aggregate size of about 0.3 µm, and 2) a carbon black made of a long chain conductive material (conductivity assistant B) and having a length of 1 µm were used. Polyvinylidene fluoride (PVdF) was used as a binder. N-methyl-2-pyrrolidone (NMP) was used as a solvent. The mass ratio of electrode compositions, i.e., active material : binder : conductivity assistants was set to 80 : 10 : 10. In addition, the mass ratio of the conductivity assistants was set to A : B = 2 : 1.
At first, the positive electrode active material, the conductivity assistant A and the PVdF were sufficiently mixed using a dry mixer. A part of the NMP solvent was added to the thus obtained, followed by a sufficient mulling. A dispersion ink made by sufficiently dispersing the conductivity assistant B in the NMP was added to the thus obtained. After all components were inputted, viscosity was regulated by properly adding the solvent to the thus obtained. With a doctor blade having a constant thickness, the thus obtained slurry was applied onto an Al foil as a current collector having thickness of 20 µm, followed by drying on a hot stirrer, and still followed by density adjustment with a roll press, to thereby prepare a positive electrode for non-aqueous electrolytic secondary battery which electrode having thickness of 50 µm and positive electrode active material layer density of 2.6 g/cc.

### <Second example>

Lithium manganese compound oxide (LiMn₂O₄) having an average particle diameter D50 of about 1 µm was used as a positive electrode active material. Carbon black having a primary particle diameter of 25 nm and an aggregate size of about 0.3 µm was used as a conductivity assistant A. A graphite having a length of 1 µm was used as a conductivity assistant B. PVdF was used as a binder. NMP was used as a solvent. The mass ratio of electrode compositions, i.e., active material : binder : conductivity assistants was set to 80 : 10 : 10. In addition, the mass ratio of the conductivity assistants was set to A : B = 2 : 1.
At first, the positive electrode active material, the conductivity assistant A and the PVdF were sufficiently mixed using a dry mixer. A part of the NMP solvent was added to the thus obtained, followed by a sufficient mulling. A dispersion ink made by sufficiently dispersing the conductivity assistant B in the NMP was added to the thus obtained. After all components were inputted, viscosity was regulated by properly adding the solvent to the thus obtained. With a doctor blade having a constant thickness, the thus obtained slurry was applied onto an Al foil as a current collector having thickness of 20 µm, followed by drying on a hot stirrer, and still followed by density adjustment with a roll press, to thereby prepare a positive electrode for non-aqueous electrolytic secondary battery which electrode having thickness of 50 µm and positive electrode active material layer density of 2.6 g/cc.

### <Third example>

Lithium manganese compound oxide (LiMn₂O₄) having an average particle diameter D50 of about 1 µm was used as a positive electrode active material. Carbon black having a primary particle diameter of 40 nm and an aggregate size of about 0.3 µm was used as a conductivity assistant A. A graphite having a length of 1 µm was used as a conductivity assistant B. PVdF was used as a binder. NMP was used as a solvent. The mass ratio of electrode compositions, i.e., active material : binder : conductivity assistants was set to 80 : 10 : 10. In addition, the mass ratio of the conductivity assistants was set to A : B = 2 : 1.
At first, the positive electrode active material, the conductivity assistant A and the PVdF were sufficiently mixed using a dry mixer. A part of the NMP solvent was added to the thus obtained, followed by a sufficient mulling. A dispersion ink made by sufficiently dispersing the conductivity assistant B in the NMP was added to the thus obtained. After all components were inputted, viscosity was regulated by properly adding the solvent to the thus obtained. With a doctor blade having a constant thickness, the thus obtained slurry was applied onto an Al foil as a current collector having thickness of 20 µm, followed by drying on a hot stirrer, and still followed by density adjustment with a roll press, to thereby prepare a positive electrode for non-aqueous electrolytic secondary battery which electrode having thickness of 50 µm and positive electrode active material layer density of 2.6 g/cc.

### <Fourth example>

Lithium manganese compound oxide (LiMn₂O₄) having an average particle diameter D50 of about 1 µm was used as a positive electrode active material. Carbon black having a primary particle diameter of 50 nm and an aggregate size of about 0.5 µm was used as a conductivity assistant A. A graphite having a length of 1 µm was used as a conductivity assistant B. PVdF was used as a binder. NMP was used as a solvent. The mass ratio of electrode compositions, i.e., active material : binder : conductivity assistants was set to 80 : 10 : 10. In addition, the mass ratio of the conductivity assistants was set to A : B = 2 : 1.
At first, the positive electrode active material, the conductivity assistant A and the PVdF were sufficiently mixed using a dry mixer. A part of the NMP solvent was added to the thus obtained, followed by a sufficient mulling. A dispersion ink made by sufficiently dispersing the conductivity assistant B in the NMP was added to the thus obtained. After all components were inputted, viscosity was regulated by properly adding the solvent to the thus obtained. With a doctor blade having a constant thickness, the thus obtained slurry was applied onto an Al foil as a current collector having thickness of 20 µm, followed by drying on a hot stirrer, and still followed by density adjustment with a roll press, to thereby prepare a positive electrode for non-aqueous electrolytic secondary battery which electrode having thickness of 50 µm and positive electrode active material layer density of 2.6 g/cc.

### <Fifth example>

Lithium manganese compound oxide (LiMn₂O₄) having an average particle diameter D50 of about 3 µm was used as a positive electrode active material. Carbon black having a primary particle diameter of 20 nm and an aggregate size of about 0.3 µm was used as a conductivity assistant A. A graphite having a length of 1 µm was used as a conductivity assistant B. PVdF was used as a binder. NMP was used as a solvent. The mass ratio of electrode compositions, i.e., active material : binder : conductivity assistants was set to 80 : 10 : 10. In addition, the mass ratio of the conductivity assistants was set to A : B = 2 : 1.
At first, the positive electrode active material, the conductivity assistant A and the PVdF were sufficiently mixed using a dry mixer. A part of the NMP solvent was added to the thus obtained, followed by a sufficient mulling. A dispersion ink made by sufficiently dispersing the conductivity assistant B in the NMP was added to the thus obtained. After all components were inputted, viscosity was regulated by properly adding the solvent to the thus obtained. With a doctor blade having a constant thickness, the thus obtained slurry was applied onto an Al foil as a current collector having thickness of 20 µm, followed by drying on a hot stirrer, and still followed by density adjustment with a roll press, to thereby prepare a positive electrode for non-aqueous electrolytic secondary battery which electrode having thickness of 50 µm and positive electrode active material layer density of 2.6 g/cc.

### <Sixth example>

Lithium manganese compound oxide (LiMn₂O₄) having an average particle diameter D50 of about 3 µm was used as a positive electrode active material. Carbon black having a primary particle diameter of 50 nm and an aggregate size of about 0.5 µm was used as a conductivity assistant A. A graphite having a length of 3 µm was used as a conductivity assistant B. PVdF was used as a binder. NMP was used as a solvent. The mass ratio of electrode compositions, i.e., active material : binder : conductivity assistants was set to 80 : 10 : 10. In addition, the mass ratio of the conductivity assistants was set to A : B = 2 : 1.
At first, the positive electrode active material, the conductivity assistant A and the PVdF were sufficiently mixed using a dry mixer. A part of the NMP solvent was added to the thus obtained, followed by a sufficient mulling. A dispersion ink made by sufficiently dispersing the conductivity assistant B in the NMP was added to the thus obtained. After all components were inputted, viscosity was regulated by properly adding the solvent to the thus obtained. With a doctor blade having a constant thickness, the thus obtained slurry was applied onto an Al foil as a current collector having thickness of 20 µm, followed by drying on a hot stirrer, and still followed by density adjustment with a roll press, to thereby prepare a positive electrode for non-aqueous electrolytic secondary battery which electrode having thickness of 50 µm and positive electrode active material layer density of 2.6 g/cc.

### <Seventh example>

Lithium manganese compound oxide (LiMn₂O₄) having an average particle diameter D50 of about 3 µm was used as a positive electrode active material. Carbon black having a primary particle diameter of 70 nm and an aggregate size of about 0.3 µm was used as a conductivity assistant A. A carbon fiber having a length of 10 µm was used as a conductivity assistant B. PVdF was used as a binder. NMP was used as a solvent. The mass ratio of electrode compositions, i.e., active material : binder : conductivity assistants was set to 80 : 10 : 10. In addition, the mass ratio of the conductivity assistants was set to A : B = 2 : 1.
At first, the positive electrode active material, the conductivity assistant A and the PVdF were sufficiently mixed using a dry mixer. A part of the NMP solvent was added to the thus obtained, followed by a sufficient mulling. A dispersion ink made by sufficiently dispersing the conductivity assistant B in the NMP was added to the thus obtained. After all components were inputted, viscosity was regulated by properly adding the solvent to the thus obtained. With a doctor blade having a constant thickness, the thus obtained slurry was applied onto an Al foil as a current collector having thickness of 20 µm, followed by drying on a hot stirrer, and still followed by density adjustment with a roll press, to thereby prepare a positive electrode for non-aqueous electrolytic secondary battery which electrode having thickness of 50 µm and positive electrode active material layer density of 2.6 g/cc.

### <First comparative example>

Lithium manganese compound oxide (LiMn₂O₄) having an average particle diameter D50 of about 1 µm was used as a positive electrode active material. Carbon black having a primary particle diameter of 80 nm and an aggregate size of about 0.5 µm was used as a conductivity assistant A. Carbon black having a length of 1 µm was used as a conductivity assistant B.
Other than the above, operations like those of the first example were repeated, to thereby prepare a positive electrode for non-aqueous electrolytic secondary battery.

### <Second comparative example>

Lithium manganese compound oxide (LiMn₂O₄) having an average particle diameter D50 of about 1 µm was used as a positive electrode active material. Carbon black having a primary particle diameter of 20 nm and an aggregate size of about 0.3 µm was used as a conductivity assistant A. A conductivity assistant B was not used.
Other than the above, operations like those of the first example were repeated, to thereby prepare a positive electrode for non-aqueous electrolytic secondary battery.

### <Third comparative example>

Lithium manganese compound oxide (LiMn₂O₄) having an average particle diameter D50 of about 10 µm was used as a positive electrode active material. Carbon black having a primary particle diameter of 50 nm and an aggregate size of about 0.5 µm was used as a conductivity assistant A. Graphite having a length of 3 µm was used as a conductivity assistant B.
Other than the above, operations like those of the first example were repeated, to thereby prepare a positive electrode for non-aqueous electrolytic secondary battery.

### <Fourth comparative example>

Lithium manganese compound oxide (LiMn₂O₄) having an average particle diameter D50 of about 1 µm was used as a positive electrode active material. Carbon black having a primary particle diameter of 20 nm and an aggregate size of about 1.0 µm was used as a conductivity assistant A. Graphite having a length of 1 µm was used as a conductivity assistant B.
Other than the above, operations like those of the first example were repeated, to thereby prepare a positive electrode for non-aqueous electrolytic secondary battery.

### <Preparation of test cell>

The positive electrodes prepared through the first to seventh embodiments and the first to fourth comparative examples were each punched with a punching jig having a diameter of 15 mm, to thereby prepare test positive electrodes. In addition, metal lithium having a diameter of 16 nm was used as a test negative electrode.

Moreover, as a separator and an electrolytic solution, LiPF₆ as lithia salt melted into an equal volume mixture {ethylene carbonate (EC) and diethyl carbonate (DEC)} to concentration of 1M was prepared.

The thus obtained negative electrode, separator, and positive electrode were stacked in this order, then an electrolytic solution was injected to the separator. Then, a current takeout terminal was connected to each of the positive electrode and the negative electrode (aluminum terminal to positive electrode, and nickel terminal to negative electrode). A battery element was put in an aluminum laminate film such that the current takeout terminal is exposed outward, followed by vacuum-sealing, to thereby prepare a test cell.

### <Evaluation characteristics of test cell>

The test cell was prepared for each of the first to seventh examples and each of the first to fourth comparative examples, and was subjected to discharge capacity measurement at an evaluation temperature of 20° C with a constant current discharge. The following table 1 shows results of measurements.

**[Table 1]**

| | Particle diameter of active material (µm) | Conductivity assistant A | | Conductivity assistant B | (50C discharge capacity/1C discharge capacity) × 100 (100%) |
|---|---|---|---|---|---|
| | | Primary diameter (nm) | Aggregate Size (µm) | Length (µm) | |
| First example | 1 | 20 | 0.3 | 1 | 80 |
| Second example | 1 | 25 | 0.3 | 1 | 83 |
| Third example | 1 | 40 | 0.3 | 1 | 85 |
| Fourth example | 1 | 50 | 0.5 | 1 | 87 |
| Fifth example | 3 | 20 | 0.3 | 1 | 77 |
| Sixth example | 3 | 50 | 0.5 | 3 | 75 |
| Seventh example | 3 | 70 | 0.3 | 10 | 60.5 |
| First comparative example | 1 | 80 | 0.5 | 1 | 20 |
| Second comparative example | 1 | 20 | 0.3 | Not used | 2 |
| Third comparative example | 10 | 50 | 0.5 | 3 | 30 |
| Fourth comparative example | 1 | 20 | 1.0 | 1 | 20 |

The first to fourth examples are compared with the first comparative example. The first comparative example using the conductivity assistant A having too large a primary particle diameter shows a heterogeneous distribution of the conductivity assistant A, failing to cause a large capacity with a large current. Moreover, the first example is compared with the fourth comparative example. The first example and the fourth comparative example are substantially the same in primary particle diameter of the conductivity assistant A. However, the fourth comparative example is larger than the first example in aggregate size of the conductivity assistant A. With the larger aggregate size, the fourth comparative example fails to allow the conductivity assistant A to be sufficiently dispersed in the active material layer, failing to secure a sufficient conductivity and thereby failing to bring about a large discharge capacity with a large current.

Moreover, the first example is compared with the second comparative example. The second comparative example without the conductivity assistant B cannot secure conductivity, therefore is unlikely to operate under a large current. The first example using the long chain conductivity assistant B can secure a relatively long electron conduction path, lowering resistance, thus bringing about a preferable discharge characteristic. Moreover, from the fifth to seventh examples, the conductivity assistant B having a length of more than or equal to 1 µm can especially bring about a high discharge capacity.

Moreover, comparing the second example and the third comparative example teaches that the active material having a large average particle diameter is likely to decrease discharge capacity under a large current.

As set forth above, using the following positive electrode of the present invention can prepare an electrode showing a high output characteristic:
A positive electrode comprising: an active material layer including: i) a positive electrode active material having an average particle diameter of less than or equal to 5 µm, ii) a conductivity assistant including: a) a particulate conductive material having: a primary particle diameter of less than or equal to 70 nm, and an aggregate size of less than 1 µm, and b) a long chain conductive material.

This application is based on a prior Japanese Patent Application No. P2006-196030 (filed on July 18, 2006 in Japan) and a prior Japanese Patent Application No. P2007-117311 (filed on April 26, 2007 in Japan). The entire contents of the Japanese Patent Application Nos. P2006-196030 and P2007-117311 from which priorities are claimed are incorporated herein by reference, in order to take some protection against translation errors or omitted portions.

The scope of the present invention is defined with reference to the following claims.

## Claims

1. A positive electrode (8) for a non-aqueous electrolytic secondary battery (10, 60), comprising:
1) a current collector (11); and
2) an active material layer (13) formed on a surface (11S) of the current collector (11), the active material layer (13) including:
i) a positive electrode active material (1) having an average particle diameter (D5) of less than or equal to 5 µm,
ii) a conductivity assistant (2, 7) including:
a) a particulate conductive material (2) having:
a primary particle diameter of less than or equal to 70 nm, and
an aggregate size of less than 1 µm, and
b) a long chain conductive material (7), and
iii) a binder (3).

2. The positive electrode (8) for the non-aqueous electrolytic secondary battery (10, 60) according to claim 1, wherein the particulate conductive material (2) has the primary particle diameter in a range from 10 nm to 60 nm.

3. The positive electrode (8) for the non-aqueous electrolytic secondary battery (10, 60) according to claim 2, wherein the particulate conductive material (2) has the primary particle diameter in the range from 10 nm to 40 nm.

4. The positive electrode (8) for the non-aqueous electrolytic secondary battery (10, 60) according to claim 1, wherein the particulate conductive material (2) has the aggregate size of less than or equal to 0.5 µm.

5. The positive electrode (8) for the non-aqueous electrolytic secondary battery (10, 60) according to claim 1, wherein the particulate conductive material (2) has the aggregate size of more than or equal to 50 nm.

6. The positive electrode (8) for the non-aqueous electrolytic secondary battery (10, 60) according to claim 5, wherein the particulate conductive material (2) has the aggregate size of more than or equal to 0.3 µm.

7. The positive electrode (8) for the non-aqueous electrolytic secondary battery (10, 60) according to claim 1, wherein the long chain conductive material (7) has a length of more than or equal to 1 µm.

8. The positive electrode (8) for the non-aqueous electrolytic secondary battery (10, 60) according to claim 7, wherein
the long chain conductive material (7) has:
the length of more than or equal to 3 µm, and
a fiber diameter in a range of 0.1 nm to 200 nm.

9. The positive electrode (8) for the non-aqueous electrolytic secondary battery (10, 60) according to claim 8, wherein
the long chain conductive material (7) has:
the length of more than or equal to 10 µm, and
the fiber diameter in a range of 50 nm to 150 nm.

10. The positive electrode (8) for the non-aqueous electrolytic secondary battery (10, 60) according to claim 1 or 7, wherein the positive electrode active material (1) includes at least one oxide selected from the group consisting of:
1) lithium manganese compound oxide,
2) lithium nickel compound oxide,
3) lithium cobalt compound oxide,
4) lithium-containing ferrous oxide, and
5) lithium-manganese-nickel-cobalt compound oxide.

11. The positive electrode (8) for the non-aqueous electrolytic secondary battery (10, 60) according to any one of claims 1, 7 and 10, wherein the conductivity assistant (2, 7) includes at least one carbon material selected from the group consisting of:
1) graphite,
2) amorphous carbon, and
3) fibrous carbon.

12. The positive electrode (8) for the non-aqueous electrolytic secondary battery (10, 60) according to any one of claims 1, 7, 1,0 and 11, wherein the binder (3) includes poly vinylidene fluoride.

13. A method for producing a positive electrode (8) for a non-aqueous electrolytic secondary battery (10, 60), the method comprising:
1) a first operation for preparing a slurry (1X) of a positive electrode active material (1), the first operation including the following sub-operations:
i) dry shattering or damp shattering the positive electrode active material (1),
ii) adding a particulate conductive material (2) and a long chain conductive material (7) sequentially,
iii) adding a polar organic solvent (5),
iv) adding a binder (3),
v) mulling, and
vi) dispersing the positive electrode active material (1); and
2) a second operation including the following sub-operations:
i) applying the slurry (1X) of the positive electrode active material (1) onto a current collector (11), and
ii) drying.

14. A method for producing a positive electrode (8) for a non-aqueous electrolytic secondary battery (10, 60), the method comprising:
1) a first operation for preparing an initial slurry (6), the first operation including the following sub-operations:
i) melting a binder (3) in a polar organic solvent (5) to thereby prepare a solution,
ii) adding a positive electrode active material (1) to the solution, and
iii) damp shattering;
2) a second operation for preparing a slurry (1X) of the positive electrode active material (1), the second operation including the following sub-operations:
i) adding a particulate conductive material (2) and a long chain conductive material (7) sequentially to the initial slurry (6), and
ii) dispersing; and
3) a third operation including the following sub-operations:
i) applying the slurry (1X) of the positive electrode active material (1) onto a current collector (11), and
ii) drying.

15. A method for producing a positive electrode (8) for a non-aqueous electrolytic secondary battery (10, 60), the method comprising:
1) a first operation for preparing a dispersed mixture body (4) by the following sub-operations:
i) dry shattering or damp shattering a positive electrode active material (1),
ii) adding a particulate conductive material (2) and a binder (3), and
iii) mixing;
2) a second operation for preparing an initial slurry (6) by the following sub-operations:
i) adding a polar organic solvent (5) to the dispersed mixture body (4), and
ii) mulling,
3) a third operation for preparing a slurry (1X) of the positive electrode active material (1) by the following sub-operation:
i) adding a long chain conductive material (7) and a polar organic solvent (5) to the initial slurry (6); and
4) a fourth operation including the following sub-operations:
i) applying the slurry (1X) of the positive electrode active material (1) onto a current collector (11), and
ii) drying.

16. A non-aqueous electrolytic secondary battery (10, 60), comprising:
1) at least one unit cell layer {19: 8(13), 15, 17} including:
i) the positive electrode (8) according to any one of claims 1, 7, 10, 11 and 12, or produced by the method according to any one of claims 13, 14 and 15,
ii) an electrolyte layer (17) stacked on the positive electrode (8), and
iii) a negative electrode (15) stacked on the electrolyte layer (17).

17. The non-aqueous electrolytic secondary battery (10) according to claim 16, wherein the non-aqueous electrolytic secondary battery (10) is of a bipolar type lithium ion secondary battery (10).

18. The non-aqueous electrolytic secondary battery (60) according to claim 16, wherein the non-aqueous electrolytic secondary battery (60) is of a type other than a bipolar type lithium ion secondary battery (10).

19. A battery pack (40) comprising:
the non-aqueous electrolytic secondary battery (10, 60) according to any one of claims 16, 17 and 18.

20. A transporter (50) comprising:
the non-aqueous electrolytic secondary battery (10, 60) according to any one of claims 16, 17 and 18, or
the battery pack according to claim 19.
